# EUROPEAN PATENT SPECIFICATION

(11) **EP 1 650 960 B1**
(45) Date of publication and mention of the grant of the patent: **22.10.2008**
(21) Application number: 06001690.4
(22) Date of filing: 04.06.2004
(51) Int. Cl.: H04N 5/232

(54) **Camera control device and digital still camera**
Kamerasteuervorrichtung und digitale Standbildkamera
Dispositif de commande de caméra et caméra électronique à images fixes

(30) Priority: 05.06.2003 JP 2003161274; 22.04.2004 JP 2004126813
(43) Date of publication of application: 26.04.2006
(62) Divisional of application: 04253324.0
(73) Proprietor: Ricoh Company, Ltd., Tokyo (JP)
(72) Inventor: Serikawa, Yoshio, Kasukabe Saitama (JP)
(74) Representative: Leeming, John Gerard

(56) References cited:
- EP-A- 0 828 383
- US-A- 5 963 255
- US-A1- 2002 171 755
- US-B1- 6 393 220

## Description

### BACKGROUND OF THE INVENTION

### FIELD OF THE INVENTION

The present invention relates to a digital still camera having the camera control device, and in particular to a camera control device that is able to execute a fast shutter release and to a digital still camera having the above-mentioned camera control device.

### DESCRIPTION OF THE RELATED ART

A known digital still camera includes several units primarily driven with a battery as a power source. These units can include a stroboscope and a LCD monitoring display, for example. Consumption of the battery for operating the digital still camera must be suppressed as much as possible in order to achieve a long battery life. One prior art design suggests using a camera control device configured to permit a shutter release only after a stroboscope is fully charged, after which electricity is then solely supplied to an LCD monitor. In this way, power is supplied to only one of the stroboscope and the LCD monitor at any given time, thereby conserving battery power. Under such a configuration, however, there exists a problem that a chance for shooting could be missed if the charge-up time is long.

Also addressing the issue of conserving battery life is Japanese Patent Laid-Open No. 11-38471, which describes a camera having an LCD monitoring display and an optical finder, in which a back light of the LCD monitoring display is turned off when a user looks at a subject through the optical finder.

Similarly, Japanese Patent Laid-Open No. 2001-169167 proposes a method in which a processing time is shortened by means of timing adjustment or multiplexing of timing to output conversion data when converting an image data of a subject.

Also, Japanese Patent Laid-Open No. 2001-249381 describes a camera including a stroboscope and a shutter release switch that has two phases. Specifically, when charged voltage of the stroboscope reaches a predetermined level that could emit light when the shutter release switch is pushed down to the first phase, the camera stops charging and permits a shutter release. In this way, an image can be captured before the stroboscope is fully charged.

However, the above-described configurations do not optimally manage the supply of power from a power source to units of a digital camera and, consequently, opportunities for image capturing can be lost and/or battery power can be unnecessarily used.

EP-A-0 828 383 discloses a digital still camera with a battery voltage detection circuit for controlling the driving of power supply circuits for various components of the camera.

US-B-6 393 2201 discloses a camera device that is configured to wait for an electronic flash to be charged to a "shooting-possible-voltage" before the system controller activates "DCDC converter" to divert power to LED and imaging circuits of the camera.

US 2002/171755 A1 discloses a battery property judging circuit for a camera. The disclosed camera is adapted to be usable both with its own "exclusive use" battery and also third party alkali batteries.

US-A-5 963 255 discloses a camera device with a feature for selecting between various lower power states of the camera based on comparison of a measured voltage of a power supply with a voltage threshold.

### SUMMARY OF THE INVENTION

It is an object of the present invention to provide a digital camera having the camera control device, that provides for shooting without missing a shooting chance, for controlling unnecessary electric current supplied to the monitoring display, and for extending battery life, by means of controlling a supply of electric current.

According to the invention there is provided a digital still camera comprising a power source, a stroboscope, a display means , a power supply monitoring means for monitoring the condition of the power source, a charging condition monitoring means for monitoring the charging condition of the stroboscope and a power supply control means; characterised in that the power supply control means is adapted to control charging of the stroboscope by:
turning power to the display means off;
charging the stroboscope until it reaches a first predetermined voltage;
when the stroboscope reaches said first predetermined voltage, determining whether the voltage of the power source is less than a second predetermined voltage; and
if the voltage of the power source is greater than the second predetermined voltage, turn the power supply to the display means on;
wherein the first predetermined voltage is a voltage such that said stroboscope will reach a fully-charged level in a time period equal to a predetermined stand-by time period, the predetermined stand-by time period being a time period from the instant that said display means receives power to the instant that said display means is able to display an image.

According to a further aspect of the invention there is provided a method for controlling a digital still camera including a power source, a stroboscope and a display means as claimed in claim 6.

By using the various aspects of the present invention, a digital still camera can shoot without missing a shooting chance moreover, can control unnecessary supply of electric current to a monitoring display, and can extend battery life, by means of controlling the supply of electric current.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 is a block diagram of a digital still camera in accordance with an aspect of the present embodiment.

Figure 2 is a block diagram illustrating the supply of electricity to elements of the digital still camera of Figure 1.

Figure 3 is a schematic representation of the power source switch of Figure 2.

Figure 4 is a schematic representation of the stroboscope of Figure 1.

Figures 5a and 5b are a flow chart of the charging operation for the stroboscope of Figure 1.

### DETAILED DESCRIPTION OF THE PREFERRED EMBODIMENTS

Referring now to the drawings, wherein like reference numerals designate identical or corresponding parts throughout the several views, a detailed description is made of the various aspects of the present invention. The above and further objects and novel features of the present invention will more fully appear from the following detailed description when the same is read in connection with the accompanying drawing. It is to be expressly understood, however, that the drawing are for purposes of illustration only and are not intended to define the limits of the present invention.

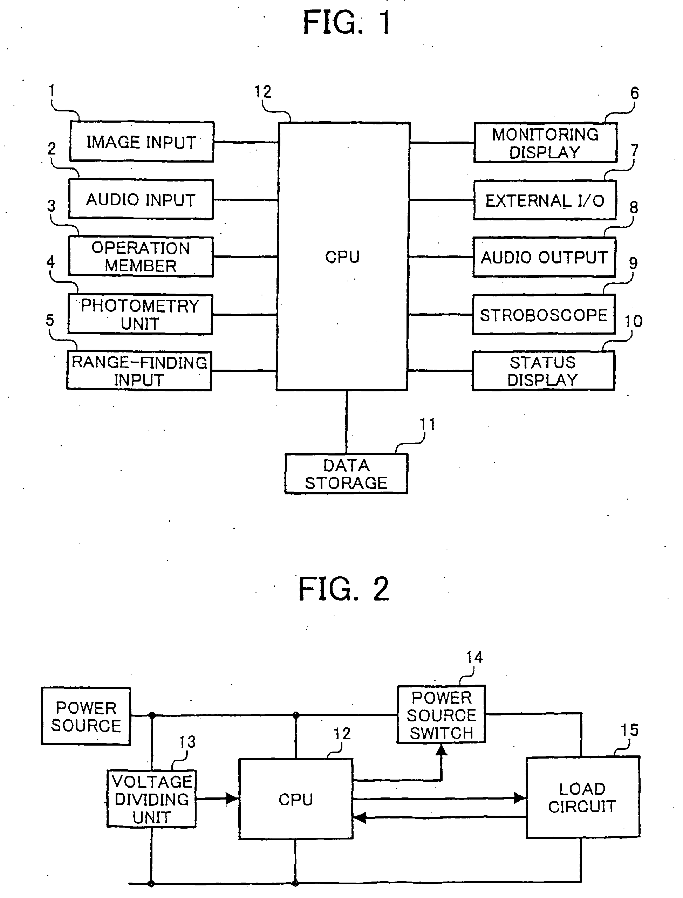

Fig. 1 is a block diagram of a digital still camera according to an aspect of the present invention. The digital still camera includes a camera control unit and a load circuit having a plurality of units, which are configured to perform functions of the camera. The load circuit includes an image input 1, an audio input 2, an operation member 3, a photometry input 4, a range-finding input 5, a monitoring display 6, an external I/O 7, an audio output 8, a stroboscope 9, a status display 10, and a data storage 11.

The camera control device is arranged as a CPU 12 and includes input/output ports communicatively connected to each of the load circuit units 1-11. The CPU 12 corresponds to a power supply monitoring means for monitoring a condition of a power source arranged in the digital still camera, and to a power supply control means for controlling a supply of electric current from the power source to the load circuit units 1-11. The CPU 12 can be configured as a conventional processing unit or, alternatively, as any other type of processing unit.

The image input 1 includes a shutter member, an optical lens, a focusing member, a diaphragm, the CCD, and an image input circuit (not shown). The image input 1 is configured to capture an optical image of a subject and to convert the optical image to an electric signal as an image data. The capture image data is processed in the CPU 12. The audio input 2 is configured to receive an audio signal from a microphone (not shown) and to send the audio signal to the CPU 12. The audio signal is processed in the CPU 12. The operation member 3 is configured to be operated by a user for setting an operation condition of the camera, such as shutter releasing, zooming, and data processing. The photometry input 4 is configured to input a condition of brightness. The range-finding input 5 is configured to input distance information to the subject. Either of the photometry input 4 or the range-finding input 5 can be omitted from the camera when the CCD is configured to receive brightness or distance information.

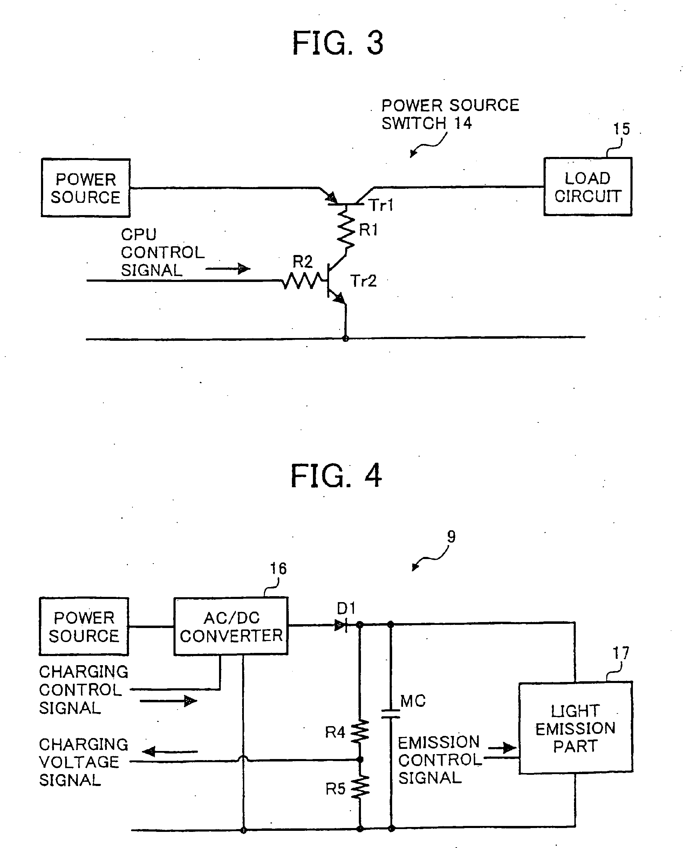

The monitoring display 6 is configured to display the image data processed in the CPU 12, and can be arranged as an LCD monitoring display, for example. The external I/O 7 is configured to communicate with an external apparatus such as a personal computer. The audio output 8 is configured to output the audio data as an audible sound. The stroboscope 9 includes a charging part and a light emission part 17 (Figure 4). The emission of light at the stroboscope 9 is controlled by the CPU 12, which receives from the stroboscope 9 a charging voltage signal. The status display 10 is configured to display condition information such as an auto focus condition and a condition of the stroboscope 9. The data storage 11 is configured to store data for operation of the digital still camera, such as image data and audio data. The CPU 12 is configured to control an operation of above-mentioned plurality of units, including the image input 1, the audio input 2, the operation member 3, the photometry input 4, the range-finding input 5, the monitoring display the, an external I/O 7, the audio output 8, the stroboscope 9, the status display 10, and the data storage 11.

Figure 2 is a block diagram illustrating the supply of electricity to each of the units 1-11 described above, collectively represented as a load circuit 15. The voltage-dividing unit 13 divides voltage of a power source to a predetermined voltage that is readable by the CPU 12, and the CPU 12 determines a condition of the power source based on the divided voltage by using an A/D converter function. Electric current is supplied to units of the load circuit 15 from the power source, and the electric current supply is controlled by the CPU 12 using a power source switch 14. The load circuit 15 can be configured such that power supplied to it is solely controlled by the CPU 12 and, in this case, the power source switch 14 is not necessary. Each unit of the load circuit 15 is controlled by an I/O signal from the CPU 12.

Figure 3 is an example of a configuration of the power source switch 14. When a CPU control signal transmitted by the CPU 12 is a logic high, a transistor Tr2 is switched 'ON' and then a transistor Tr1 is switched 'ON' in sequence. As a result, electric current from the power source is supplied and controlled for the load circuit 15.

Figure 4 is an example of a configuration of the stroboscope 9. The voltage of the power source is pulled up at the AC/DC converter 16 based on a charging control signal transmitted by the CPU 12. Subsequently, electric current is commutated at diode D 1 and is charged to main capacitor MC. A charging voltage of the stroboscope 9 is pulled down at both a resistor R4 and a resistor R5 to a predetermined voltage that is readable by the CPU 12, and the pulled down voltage is sent back to the CPU 12. The CPU 12 estimates the charging voltage of the stroboscope with the pulled down voltage by means of an A/D converting function. The light emission part 17 is configured to selectively start and stop emission of light based on a light emission control signal transmitted from the CPU 12.

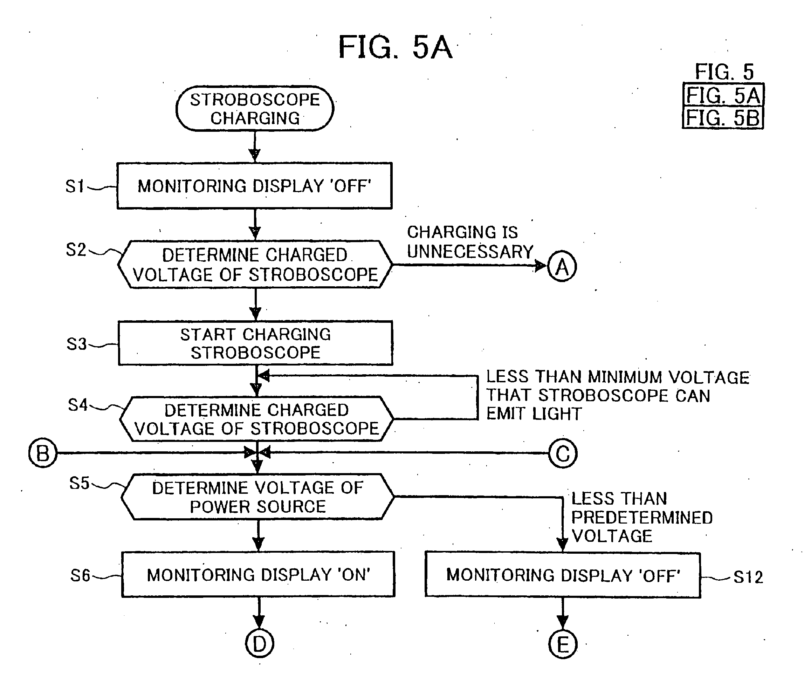

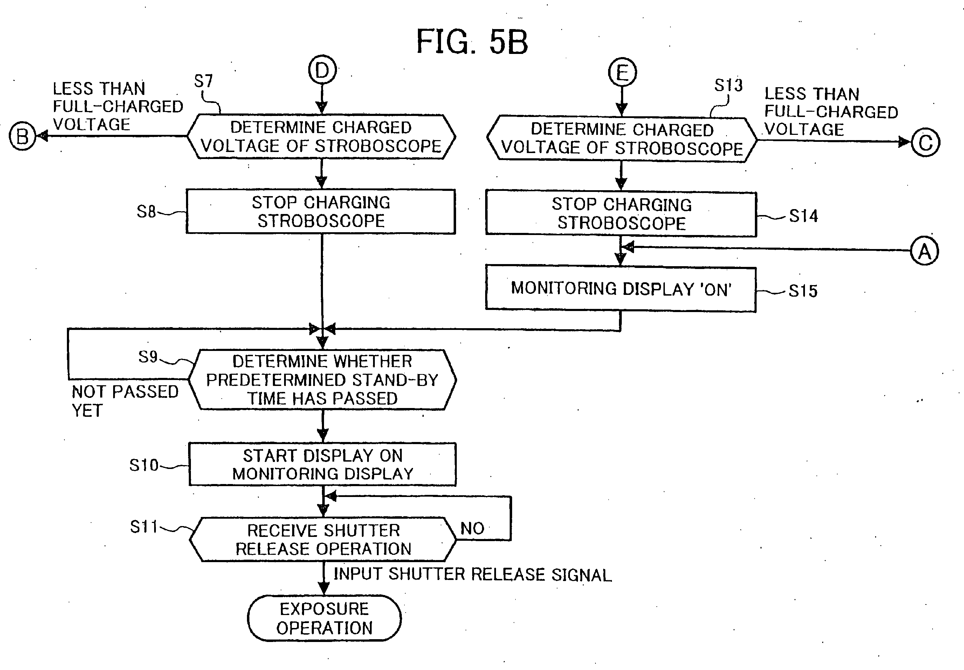

Figures 5a and 5b illustrate the steps of charging the stroboscope 9. At first, electric current is not supplied to the LCD monitoring display from the power source, such that the monitoring display is in an 'OFF' setting (step S1). Charging to the stroboscope 9 is determined to be necessary (step S2) if voltage charged currently in the stroboscope 9 is less than a predetermined minimum voltage necessary to emit light. When the present voltage of the stroboscope 9 is determined to be less than the predetermined minimum voltage, CPU 12 transmits the charging control signal to charge the stroboscope 9 and charging starts (step S3). The predetermined minimum voltage is a criterion set based on a minimum light volume from the light emission part 17 that is needed for shooting. Data representing the predetermined minimum voltage can be stored in a memory unit of the CPU 12 or in another memory unit of the digital still camera.

The CPU 12 monitors a charging voltage signal transmitted from the stroboscope 9, and when the charged voltage of the stroboscope reaches the minimum voltage to emit light (step S4), the CPU determines the voltage of the power source (step S5). The CPU 12 deems that the power source is in a state able to supply power to at least two of the units of the load circuit 15, e.g., the stroboscope 9 and the monitoring display 6, if the voltage of the power source is more than or equal to a predetermined criterion relating to the power source. Data representing this predetermined criterion can be stored in a memory unit located in the CPU 12 or in another memory unit of the digital still camera. When the voltage of the power source is greater than or equal to the predetermined criterion, the CPU 12 transmits a control signal to the power source switch 14 to allow a supply of electric current to the monitoring display 6. This supply of electric current switches the monitoring display 6 to an "ON" mode (step S6). The predetermined criterion is set higher than a voltage level at which the digital still camera will become unstable if the power source simultaneously supplies electric current to two load circuit units, such as the stroboscope 9 and the monitoring display 6. Step S6 also includes supplying power to the image input 1, which displays a monitoring image on the monitoring display 6.

Subsequently, the CPU 12 monitors the charging voltage of the stroboscope 9 by monitoring the pulled down voltage by means of an A/D converting function, and step S5 is repeated if the voltage of the stroboscope 9 is less than a full-charged voltage level (step S7). When the voltage of the stroboscope 9 reaches the full-charged voltage, charging is stopped (step S8), and the CPU 12 determines whether the predetermined stand-by time of the monitoring display 6 has passed (step S9). As discussed above, the monitoring display 6 is unable to display an image immediately upon receiving power (e.g., in step S6), and predetermined stand-by time represents the time period between the instance power is supplied to the monitoring display 6 to the instance the monitoring display 6 is able to display an image received from the image input I. Data representing the predetermined stand-by time can be stored in a memory unit of the CPU 12 or in another memory unit of the digital still camera. If the predetermined stand-by time has passed, displaying on the monitoring display is started (step S10). At the same time, a shutter release operation is allowed (step S11), and an exposure operation will start if a shutter release signal is transmitted based on activation of the operation member 3 by a user.

If the voltage of the power source is determined to be less than the predetermined criterion in step S5, electric current continues to be withheld from the monitoring display 6 (step S12), and the CPU monitors the charging voltage of the stroboscope 9 by monitoring the pulled down voltage by means of the A/D converting function. Step S5 is repeated if it is determined that the voltage of the stroboscope 9 has not reached the full-charged voltage level (step S 13). When the voltage of the stroboscope 9 reaches the full-charged voltage, charging is stopped (step S14), and the power source is allowed to supply electric current to the monitoring display 6 via the power source switch 14 (step S 15). The process then proceeds to above-mentioned step S9. Processing in steps S13, S14 and S15 is similar to processing on step S7, S8 and S6, respectively.

While the stroboscope 9 is being charged in step S3, the user may mistakenly believe that the digital still camera is powered off because the monitoring display 6 is in an 'OFF' mode. Such a misunderstanding can be prevented by indicating a charging status during the stroboscope charging operation on a indication substitute means, such as a LED, and then by subsequently resuming displaying on the monitoring display.

Also, the digital still camera can control unnecessary electric current supplied to the monitoring display 6 by setting the predetermined criterion (i.e., the minimum voltage level of the stroboscope 9) referred to in step S4 of Figure 5a to a particular voltage level that allows the stroboscope 9 to be fully-charged at the same time that the monitoring display 6 to ready to display an image (i.e., after the predetermined stand-by time passes). That is, referring to Figures 5a and 5b, the predetermined criterion can be selected such that step S8 or step S14 occur at the same time as step S10, thereby allowing a user to view an image on the monitoring display 6 at the exact moment that the stroboscope 9 is fully-charged.

Moreover, the digital still camera of the present invention can be configured to accommodate several types of power sources, e.g., lithium ion batteries, alkaline batteries, and dummy batteries connected to AC power. The digital still camera can also be configured to detect the type of power sources attached to the digital still camera by way of, for example, a mechanical sensor that transmits an identifying signal to the CPU 12. For finite-power sources, such as lithium ion or alkaline batteries, the digital still camera can efficiently manage battery life by monitoring the selected power source based on determination criterion corresponding to the type of power source and by controlling the supply of electric current according to the power source.

Alternative to the method described above, if the CPU 12 determines that the voltage of the power source is less than the predetermined criterion at step S5, the predetermined criterion may be set to have two values following this determination. The two values include a first sub-criterion used to determine when an electric current can be supplied to both the stroboscope 9 to charge and to the monitoring display 6, and a second sub-criterion used to determine when an electric current is to be withheld from the monitoring display 6 during charging the stroboscope 9. The first sub-criterion is set at a higher level than the second sub-criterion. In this manner, the digital still camera of the present invention can prevent unstable processing that may occur due to a signal noise or an unexpected changing of the voltage of the power source.

The digital still camera of the present invention can perform the above-described functions with a simple composition and without the need for additional components. Obviously, numerous modifications and variations of the present invention are possible in light of the above teachings. It is therefore to be understood that within the scope of the appended claims, the invention may be practiced otherwise than as specifically described herein.

## Claims

1. A digital still camera comprising a power source, a stroboscope (9), a display means (6), a power supply monitoring means (12) for monitoring the condition of the power source, a charging condition monitoring means for monitoring the charging condition of the stroboscope and a power supply control means; **characterised in that** the power supply control means is adapted to control charging of the stroboscope by:
turning power to the display means (6) off;
charging the stroboscope until it reaches a first predetermined voltage;
when the stroboscope reaches said first predetermined voltage, determining whether the voltage of the power source is less than a second predetermined voltage; and
if the voltage of the power source is greater than the second predetermined voltage, turn the power supply to the display means on;
wherein the first predetermined voltage is a voltage such that said stroboscope will reach a fully-charged level in a time period equal to a predetermined stand-by time period, the predetermined stand-by time period being a time period from the instant that said display means receives power to the instant that said display means is able to display an image.

2. The camera control device according to claim 1, wherein,
when said stroboscope reaches said first predetermined voltage and before charging of said stroboscope is complete, the voltage of said power source is measured,
said power supply control means (12) allows electric current to be supplied from said power source to said display means when said voltage of said power source is equal to or greater than said second predetermined voltage, and
said power supply control means controls said display means (6) to display said image after said display means reaches a state in which said display means is able to display said image and after charging of said stroboscope is completed.

3. A camera according to claim 1 or 2, wherein,
the voltage of said power source is measured after said power source begins supplying electric current to said display means and before charging of said stroboscope is completed,
said power supply control means (12) interrupts said supply of electric current from said power source to said display means when said voltage of said power source is less than said second predetermined voltage, and
said power supply control means (12) controls resumption of said supply of electric current from said power source to said display means when said stroboscope is fully-charged.

4. A camera control device according to any one of claims 1 to 3 comprising:
at least one input/output port communicatively connected to a plurality of units arranged in said digital still camera.

5. A system comprising:
a plurality of load circuit units;
a power source configured to supply electric current to said plurality of units; and
a digital still camera according to any one of claims 1 to 4 wherein said plurality of units refers to said plurality of local circuit units.

6. A method for controlling a digital still camera including a power source, a stroboscope and a display means, said method comprising a method of controlling charging of the stroboscope by:
turning power to the display means off;
charging the stroboscope until it reaches a first predetermined voltage;
when the stroboscope reaches a first predetermined voltage, determining whether the voltage of the power source is less than a first predetermined voltage; and
if the voltage of the power source is greater than the second predetermined voltage, turning the power supply to the display means on;
wherein the first predetermined voltage is a voltage such that said stroboscope will reach a fully-charged level in a time period equal to a predetermined stand-by time period, the predetermined stand-by time period being a time period from the instant that said display means receives power to the instant that said display means is able to display an image.

7. A method according to claim 6, comprising:
when said stroboscope reaches said first predetermined voltage and before charging of said stroboscope is complete, measuring the voltage of said power source,
allowing electric current to be supplied to the display means when said measured voltage of said power source is equal to or greater than said second predetermined voltage; and
controlling said display means an image after said display reaches a state in which said display means is able to display said image and after charging of said stroboscope is completed.

8. A method according to either claim 6 or 7, comprising:
measuring a voltage of said power source after said power source begins supplying electric current to said display means and before charging of said stroboscope is completed;
interrupting a supply of electric current from said power source to said display means when said measured voltage of said power source is less than the second predetermined voltage; and
allowing said supply of electric current from said power source to said display means when charging of said stroboscope is completed.

## Patentansprüche

1. Digitale Standbildkamera, die eine Stromquelle, ein Stroboskop (9), eine Anzeigeeinrichtung (6), eine Stromversorgungsüberwachungseinrichtung (12) zum Überwachen des Zustands der Stromquelle, eine Ladezustandsüberwachungseinrichtung zum Überwachen des Ladezustands des Stroboskops und eine Stromversorgungssteuerungseinrichtung umfasst; **dadurch gekennzeichnet, dass** die Stromversorgungssteuerungseinrichtung angepasst ist, um das Laden des Stroboskops zu steuern durch:
Abschalten des Stroms für die Anzeigeeinrichtung (6);
Laden des Stroboskops, bis es eine erste vorbestimmte Spannung erreicht;
wenn das Stroboskop die erste vorbestimmte Spannung erreicht, Bestimmen, ob die Spannung der Stromquelle niedriger ist als eine zweite vorbestimmte Spannung; und
falls die Spannung der Stromquelle höher ist als die zweite vorbestimmte Spannung, Anschalten der Stromversorgung für die Anzeigeeinrichtung;
wobei die erste vorbestimmte Spannung eine solche Spannung ist, dass das Stroboskop ein Niveau vollständiger Ladung in einem Zeitraum erreichen wird, der gleich einem vorbestimmten Bereitschaftszeitraum ist, wobei der vorbestimmte Bereitschaftszeitraum ein Zeitraum ist von dem Augenblick, in dem die Anzeigeeinrichtung Strom erhält, bis zu dem Augenblick, in dem die Anzeigeeinrichtung in der Lage ist, ein Bild anzuzeigen.

2. Kamerasteuerungsvorrichtung nach Anspruch 1, wobei,
wenn das Stroboskop die erste vorbestimmte Spannung erreicht und bevor das Laden des Stroboskops abgeschlossen ist, die Spannung der Stromquelle gemessen wird,
die Stromversorgungssteuerungseinrichtung (12) es ermöglicht, dass der Anzeigeeinrichtung elektrischer Strom aus der Stromquelle zugeführt wird, wenn die Spannung der Stromquelle gleich oder größer ist als die zweite vorbestimmte Spannung, und
die Stromversorgungssteuerungseinrichtung die Anzeigeeinrichtung (6) so steuert, dass sie das Bild anzeigt, nachdem die Anzeigeeinrichtung einen Zustand erreicht hat, in dem die Anzeigeeinrichtung in der Lage ist, das Bild anzuzeigen, und nachdem das Laden des Stroboskops abgeschlossen ist.

3. Kamera nach Anspruch 1 oder 2, wobei
die Spannung der Stromquelle gemessen wird, nachdem die Stromquelle begonnen hat, der Anzeigeeinrichtung elektrischen Strom zuzuführen, und bevor das Laden des Stroboskops abgeschlossen ist,
die Stromversorgungssteuerungseinrichtung (12) die Zufuhr elektrischen Stroms aus der Stromquelle zur Anzeigeeinrichtung unterbricht, wenn die Spannung der Stromquelle niedriger ist als die zweite vorbestimmte Spannung, und
die Stromversorgungssteuerungseinrichtung (12) die Wiederaufnahme der Zufuhr elektrischen Stroms aus der Stromquelle zur Anzeigeeinrichtung steuert, wenn das Stroboskop vollständig geladen ist.

4. Kamerasteuerungsvorrichtung nach einem der Ansprüche 1 bis 3, umfassend:
zumindest einen Eingangs-/Ausgangsport, der kommunikativ mit einer Mehrzahl von Einheiten verbunden ist, die in der digitalen Stehbildkamera angeordnet sind.

5. System, umfassend:
eine Mehrzahl von Lastkreiseinheiten;
eine Stromquelle, die so gestaltet ist, dass sie die Mehrzahl von Einheiten mit elektrischem Strom versorgt; und
eine digitale Standbildkamera nach einem der Ansprüche 1 bis 4, wobei sich die Mehrzahl von Einheiten auf die Mehrzahl von lokalen Kreiseinheiten bezieht.

6. Verfahren zum Steuern einer digitalen Standbildkamera, beinhaltend eine Stromquelle, ein Stroboskop und eine Anzeigeeinrichtung, wobei das Verfahren ein Verfahren umfasst, um das Laden des Stroboskops zu steuern durch:
Abschalten des Stroms für die Anzeigeeinrichtung;
Laden des Stroboskops, bis es eine erste vorbestimmte Spannung erreicht;
wenn das Stroboskop eine erste vorbestimmte Spannung erreicht, Bestimmen, ob die Spannung der Stromquelle niedriger ist als eine erste vorbestimmte Spannung; und
falls die Spannung der Stromquelle höher ist als die zweite vorbestimmte Spannung, Anschalten der Stromversorgung für die Anzeigeeinrichtung;
wobei die erste vorbestimmte Spannung eine solche Spannung ist, dass das Stroboskop ein Niveau vollständiger Ladung in einem Zeitraum erreichen wird, der gleich einem vorbestimmten Bereitschaftszeitraum ist, wobei der vorbestimmte Bereitschaftszeitraum ein Zeitraum ist von dem Augenblick, in dem die Anzeigeeinrichtung Strom erhält, bis zu dem Augenblick, in dem die Anzeigeeinrichtung in der Lage ist, ein Bild anzuzeigen.

7. Verfahren nach Anspruch 6, umfassend:
wenn das Stroboskop die erste vorbestimmte Spannung erreicht und bevor das Laden des Stroboskops abgeschlossen ist, Messen der Spannung der Stromquelle,
Ermöglichen, dass der Anzeigeeinrichtung elektrischer Strom zugeführt wird, wenn die gemessene Spannung der Stromquelle gleich oder größer ist als die zweite vorbestimmte Spannung, und
Steuern der Anzeigeeinrichtung ein Bild, nachdem die Anzeige einen Zustand erreicht hat, in dem die Anzeigeeinrichtung in der Lage ist, das Bild anzuzeigen, und nachdem das Laden des Stroboskops abgeschlossen ist.

8. Verfahren nach Anspruch 6 oder 7, umfassend:
Messen einer Spannung der Stromquelle, nachdem die Stromquelle begonnen hat, der Anzeigeeinrichtung elektrischen Strom zuzuführen, und bevor das Laden des Stroboskops abgeschlossen ist;
Unterbrechen einer Zufuhr elektrischen Stroms aus der Stromquelle zur Anzeigeeinrichtung, wenn die gemessene Spannung der Stromquelle niedriger ist als die zweite vorbestimmte Spannung, und
Ermöglichen der Zufuhr elektrischen Stroms aus der Stromquelle zur Anzeigeeinrichtung, wenn das Laden des Stroboskops abgeschlossen ist.

## Revendications

1. Appareil photo numérique comprenant une source de puissance, un stroboscope (9), un moyen d'affichage (6) et un moyen de surveillance d'alimentation (12) pour surveiller la condition de la source de puissance, un moyen de surveillance de condition de charge pour surveiller la condition de charge du stroboscope et un moyen de commande d'alimentation, **caractérisé en ce que** le moyen de commande d'alimentation est adapté pour commander la charge du stroboscope en :
désactivant le moyen d'affichage (6) ;
chargeant le stroboscope jusqu'à ce qu'il atteigne une première tension prédéterminée ;
lorsque le stroboscope atteint ladite première tension prédéterminée, en déterminant si la source de puissance est inférieure à une seconde tension prédéterminée ; et
si la tension de la source de puissance est supérieure à la seconde tension prédéterminée, en activant l'alimentation sur le moyen d'affichage,
dans lequel la première tension prédéterminée est une tension qui est telle que ledit stroboscope atteindra un niveau pleinement chargé dans une période temporelle égale à une période temporelle d'attente prédéterminée, la période temporelle d'attente prédéterminée étant une période temporelle depuis l'instant où ledit moyen d'affichage reçoit de la puissance jusqu'à l'instant où ledit moyen d'affichage peut afficher une image.

2. Dispositif de commande d'appareil photo selon la revendication 1, dans lequel :
lorsque ledit stroboscope atteint ladite première tension prédéterminée et avant que la charge dudit stroboscope ne soit terminée, la tension de ladite source de puissance est mesurée ;
ledit moyen de commande d'alimentation (12) permet qu'un courant électrique soit appliqué depuis ladite source de puissance sur ledit moyen d'affichage lorsque ladite tension de ladite source de puissance est égale ou supérieure à ladite seconde tension prédéterminée ; et
ledit moyen de commande d'alimentation commande ledit moyen d'affichage (6) pour afficher ladite image après que ledit moyen d'affichage atteint un état dans lequel ledit moyen d'affichage peut afficher ladite image et après que la charge dudit stroboscope est terminée.

3. Appareil photo selon la revendication 1 ou 2, dans lequel :
la tension de ladite source de puissance est mesurée après que ladite source de puissance commence à appliquer un courant électrique sur ledit moyen d'affichage et avant que la charge dudit stroboscope ne soit terminée ;
ledit moyen de commande d'alimentation (12) interrompt ladite application de courant électrique depuis ladite source de puissance sur ledit moyen d'affichage lorsque ladite tension de ladite source de puissance est inférieure à ladite seconde tension prédéterminée ; et
ledit moyen de commande d'alimentation (12) commande la reprise de ladite application de courant électrique depuis ladite source de puissance sur ledit moyen d'affichage lorsque ledit stroboscope est pleinement chargé.

4. Dispositif de commande d'appareil photo selon l'une quelconque des revendications 1 à 3, comprenant :
au moins un port d'entrée/sortie connecté en communication à une pluralité d'unités agencées dans ledit appareil photo numérique.

5. Système comprenant :
une pluralité d'unités de circuit de charge ;
une source de puissance configurée pour appliquer un courant électrique sur ladite pluralité d'unités ; et
un appareil photo numérique selon l'une quelconque des revendications 1 à 4, où les unités de ladite pluralité d'unités se réfèrent à ladite pluralité d'unités de circuit local.

6. Procédé pour commander un appareil photo numérique incluant une source de puissance, un stroboscope et un moyen d'affichage, ledit procédé comprenant un procédé de commande de charge du stroboscope en :
désactivant le moyen d'affichage ;
chargeant le stroboscope jusqu'à ce qu'il atteigne une première tension prédéterminée ;
lorsque le stroboscope atteint une première tension prédéterminée, en déterminant si la tension de la source de puissance est inférieure à une première tension prédéterminée ; et
si la tension de la source de puissance est supérieure à la seconde tension prédéterminée, en activant l'alimentation sur le moyen d'affichage,
dans lequel la première tension prédéterminée est une tension qui est telle que ledit stroboscope atteindra un niveau pleinement chargé dans une période temporelle égale à une période temporelle d'attente prédéterminée, la période temporelle d'attente prédéterminée étant une période temporelle depuis l'instant où ledit moyen d'affichage reçoit de la puissance jusqu'à l'instant où ledit moyen d'affichage peut afficher une image.

7. Procédé selon la revendication 6, comprenant :
lorsque ledit stroboscope atteint ladite première tension prédéterminée et avant que la charge dudit stroboscope ne soit terminée, la mesure de la tension de ladite source de puissance ;
l'autorisation du fait qu'un courant électrique soit appliqué sur ledit moyen d'affichage lorsque ladite tension mesurée de ladite source de puissance est égale ou supérieure à ladite seconde tension prédéterminée ; et
la commande dudit moyen d'affichage une image après que ledit affichage atteint un état dans lequel ledit moyen d'affichage peut afficher ladite image et après que la charge dudit stroboscope est terminée.

8. Procédé selon la revendication 6 ou 7, comprenant :
la mesure d'une tension de ladite source de puissance après que ladite source de puissance commence à appliquer un courant électrique sur ledit moyen d'affichage et avant que la charge dudit stroboscope ne soit terminée ; et
l'interruption de l'application de courant électrique depuis ladite source de puissance sur ledit moyen d'affichage lorsque ladite tension mesurée de ladite source de puissance est inférieure à la seconde tension prédéterminée ; et
l'autorisation de ladite application de courant électrique depuis ladite source de puissance sur ledit moyen d'affichage lorsque la charge dudit stroboscope est terminée.
